# FASCICULE DE BREVET EUROPEEN

(11) **EP 2 444 827 B1**
(45) Date de publication et mention de la délivrance du brevet: **03.04.2019**
(21) Numéro de dépôt: 11186020.1
(22) Date de dépôt: 20.10.2011
(51) Int. Cl.: G02B 6/38

(54) **CONTACT OPTIQUE, CONNECTEUR MULTICONTACT ET PROCEDE DE CONNEXION DE DEUX CONTACTS OPTIQUES**
Optischer Kontakt, Mehrfachstecker und Verfahren zur Verbindung zweier optischer Kontakte
Optical contact, multi-contact connector and method for connecting two optical contacts

(30) Priorité: 22.10.2010 FR 1058676
(43) Date de publication de la demande: 25.04.2012
(73) Titulaire: RADIALL, 93110 Rosny-Sous-Bois (FR)
(72) Inventeur: Valencia, Laurent, 73240 SAINT GENIX SUR GUIERS (FR)
(74) Mandataire: Nony

(56) Documents cités:
- EP-A1- 1 107 032
- EP-A2- 0 505 197
- EP-A2- 1 092 995
- EP-A2- 1 092 996
- EP-B1- 0 886 798
- WO-A1-2006/086153
- US-A- 6 116 788
- US-A1- 2006 002 659
- US-A1- 2009 097 799
- US-B1- 6 371 659
- US-B1- 6 450 698

## Description

La présente invention a pour objet un contact optique ainsi qu'un connecteur multicontact comportant au moins un tel contact optique.

Il est connu d'utiliser, pour réaliser des connexions optiques, des contacts optiques comportant des férules recevant l'extrémité de rubans portant des fibres optiques. Il s'agit par exemple de férules MT. Dans les contacts optiques connus, la face par laquelle une férule vient au contact de la férule d'un contact de type complémentaire n'est pas protégée contre les chocs ou les rayures qui peuvent se produire lorsque le contact optique est manipulé, notamment lors de son insertion dans un connecteur multicontact.

En outre, la connexion de tels contacts, lorsqu'ils sont utilisés dans des connecteurs de rack ou de fond de panier, peut occasionner des déports latéraux et/ou angulaires. Les férules MT de type mâle peuvent comporter des goupilles permettant un recentrage entre deux contacts de type complémentaire à connecter. Néanmoins, ces goupilles présentent de faibles chanfreins impropres à compenser des déports importants entre deux contacts à connecter ensemble. C'est pourquoi il est connu, par exemple du brevet US 6 116 788, d'avoir recours à un système de repositionnement à disposer entre les deux contacts à connecter.

Les documents EP1092996-A2 et US6450698-B1 décrivent des connecteurs optiques ayant des projections de centrage et de pré-alignement.

Par ailleurs, le montage d'un contact optique connu se fait généralement en disposant les différents éléments du contact optique les uns à la suite des autres selon un axe. Si, lors de l'assemblage du contact, un de ses éléments est oublié, si un élément est mal monté ou si un élément du contact est endommagé, par exemple lors de l'insertion du contact dans un connecteur ou dans un four de polymérisation, il peut s'avérer nécessaire de devoir démonter l'ensemble du contact optique.

Il existe un besoin pour remédier à tout ou partie des inconvénients précités.

L'invention répond à ce besoin grâce à un contact optique, comportant :
- une férule s'étendant selon un axe longitudinal, la férule comportant une face avant venant en regard d'un contact optique de type complémentaire lorsque ledit contact optique est connecté audit contact optique de type complémentaire, et une face arrière opposée à ladite face avant, et
- un corps à l'intérieur duquel est reçue la férule, de façon mobile ou non le corps comportant au moins une portion entourant extérieurement la férule autour de l'axe longitudinal de celle-ci et au moins une portion s'étendant au-delà de la face arrière de la férule vers l'extérieur de celle-ci,
l'extrémité du corps, venant en regard d'un contact optique de type complémentaire lorsque ledit contact optique est connecté audit contact optique de type complémentaire, comportant au moins une portion s'étendant au-delà de la face avant de la férule vers l'extérieur de celle-ci, pour toute position de la férule à l'intérieur du corps, et ladite extrémité du corps comportant également au moins une portion au-delà de laquelle s'étend la face avant de la férule.

Selon l'invention, du fait de la configuration du corps, la férule est disposée à l'intérieur du corps et la face avant de la férule est protégée lorsque cette dernière est disposée dans le corps. La férule peut ainsi être encapsulée dans le corps. Ainsi, les risques d'endommagement de la férule lors des manipulations du contact optique, notamment lors de son insertion dans un boîtier de connecteur multicontact, sont réduits.

La férule peut être une férule optique MT ou tout autre type de férule optique ou tout composant actif permettant de générer ou de recevoir des signaux optiques.

La férule peut être montée mobile dans le corps selon un axe parallèle à son axe longitudinal. Le contact comporte par exemple un ressort monté dans le corps et dont une extrémité vient en appui, directement ou non, c'est-à-dire avec ou sans pièces intermédiaire, contre la face arrière de la férule. Le ressort peut être encapsulé dans le corps.

Le corps peut être configuré de manière à ne recevoir qu'une seule férule. La férule peut venir directement au contact du corps lorsqu'elle est reçue dans ce dernier, sans pièce intermédiaire.

La férule peut avoir une section transversale rectangulaire et chacun des bords latéraux de la férule peut comporter un épaulement venant au contact d'un épaulement correspondant du corps pour définir une butée pour le déplacement vers l'avant de la férule dans le corps. Au sens de l'invention, au moins une portion du corps s'étend au-delà de la face avant de la férule vers l'extérieur de celle-ci lorsque la férule est dans cette position définissant une butée vers l'avant.

La compression maximale du ressort, déterminée par la raideur de celui-ci, peut définir une butée pour le déplacement vers l'arrière de la férule dans le corps.

Le contact peut être de type mâle et comporter au moins une goupille et un logement pour recevoir ladite goupille, cette dernière étant disposée parallèlement à l'axe de la férule lorsqu'elle est montée dans ledit logement, la goupille s'étendant au-delà de la face avant de la férule vers l'extérieur de celle-ci sur une deuxième distance, ladite portion du corps s'étendant au-delà de la face avant de la férule comportant au moins un bras s'étendant au-delà de la face avant de la férule vers l'extérieur de celle-ci sur une première distance supérieure à la deuxième distance.

Grâce à cette configuration du bras, le corps peut comporter une portion faisant saillie au-delà des goupilles du contact de type mâle. Ce ou ces bras peuvent permettre, lorsque l'on cherche à connecter deux contacts de type complémentaire, d'effectuer un premier alignement de la férule du contact de type femelle avant que cette dernière ne vienne au contact des goupilles de la férule du contact de type mâle qui assurent un deuxième alignement du contact de type femelle par rapport au contact de type mâle, ce qui permet de faciliter et d'améliorer le centrage de deux contacts optiques de type complémentaire lors de leur connexion.

La portion s'étendant au-delà de la face avant de la férule comporte par exemple deux bras et chacun de ces deux bras peut s'étendre dans le prolongement d'une paroi du corps au contact d'un bord latéral de la férule.

La distance entre les deux bras correspond par exemple à la distance entre les deux bords latéraux de la férule.

Le corps peut être formé par au moins deux pièces, chacune desdites pièces comportant des moyens permettant l'assemblage amovible d'une pièce avec une autre, lesdits moyens étant configurés de manière à ce que l'assemblage et le désassemblage desdites pièces s'effectuent en exerçant une force sur les pièces perpendiculairement à l'axe longitudinal de la férule.

Du fait de cette configuration des moyens d'assemblage, la réparation ou la modification du contact optique peut être simple et peu coûteuse, puisqu'il n'est alors pas nécessaire de recâbler la férule.

La portion de l'extrémité du corps s'étendant au-delà de la face avant de la férule vers l'extérieur de celle-ci peut n'être portée que par une seule des pièces du corps et la portion de cette même extrémité du corps au-delà de laquelle la face avant de la férule peut être portée par une autre desdites pièces formant le corps.

Le corps est par exemple formé par deux pièces. Dans un tel cas, chaque pièce peut comporter une découpe sur une face latérale, de telle sorte que lorsque les deux pièces sont assemblées, les découpes soient en regard l'une de l'autre.

Le contact peut présenter une section transversale rectangulaire, s'étendant selon un axe longitudinal parallèle à celui selon lequel s'étend la férule lorsqu'elle est reçue dans le corps.

L'invention a encore pour objet, selon un autre de ces aspects, un connecteur multicontact, comportant un boîtier dans lequel est reçu au moins un contact tel que défini ci-dessus.

Le boîtier comporte par exemple plusieurs logements superposés, permettant un empilement des contacts dans le boîtier.

L'invention a encore pour objet, selon un autre de ces aspects, un procédé de connexion de contacts optiques, l'un des deux contacts optiques étant un contact de type mâle tel que défini ci-dessus, et l'autre des deux contacts optiques étant tel que défini ci-dessus, de type femelle et ayant une férule comportant au moins un logement pour recevoir une goupille d'un contact de type mâle,
le procédé comportant les étapes suivantes :
- réaliser un premier alignement en faisant coulisser au moins un bord latéral de la férule du contact de type femelle contre au moins un bras du corps du contact de type mâle et,
- réaliser un deuxième alignement en introduisant au moins une goupille du contact de type mâle dans ledit logement de la férule du contact de type femelle.

L'invention pourra être mieux comprise à la lecture de la description qui va suivre d'exemples non limitatifs de mise en oeuvre de celle-ci et à l'examen du dessin annexe sur lequel :
- la figure 1 est une vue en éclaté d'un contact selon un exemple de mise en oeuvre de l'invention,
- les figures 2 à 4 représentent différentes étapes d'assemblage du corps du contact de la figure 1,
- les figures 5 et 6 représentent respectivement un contact de type mâle et un contact de type femelle,
- les figures 7 et 8 représentent deux étapes lors de la connexion du contact représenté à la figure 5 au contact représenté à la figure 6, et
- la figure 9 représente de façon schématique un boîtier comportant une pluralité de contacts selon la figure 1.

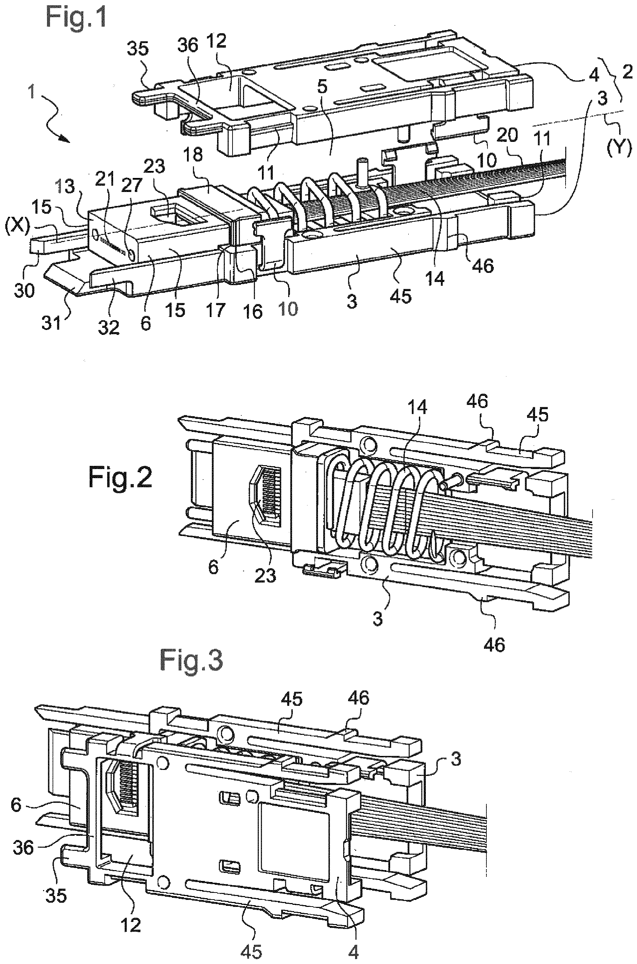

On a représenté à la figure 1 un contact optique désigné globalement par 1 selon un premier exemple de mise en oeuvre de l'invention.

Ce contact optique 1 comporte un corps qui est formé, dans l'exemple considéré, par deux pièces 3 et 4. Chacune de ces pièces 3 et 4 peut définir sensiblement une moitié du corps, mais l'invention n'est pas limitée à un nombre particulier de pièces pour former le corps 2, ni à des pièces ne formant que des portions du corps de mêmes dimensions. Ces pièces 2 et 3 forment, lorsqu'elles sont assemblées ensemble, un boîtier de forme parallélépipédique selon un axe Y, ce boîtier définissant un logement 5 dans lequel est reçue une férule, désignée globalement par 6, qui sera décrite par la suite.

Comme représenté sur la figure 1, chacune des pièces 3 et 4 comporte des moyens d'assemblage de l'une à l'autre. Ces moyens se présentent par exemple sous la forme de pattes élastiquement déformables 10 coopérant avec des rainures ou des fentes 11 pour réaliser l'assemblage des pièces 3 et 4 entre elles. La pièce 3 peut ne comporter que des pattes 10 et la pièce 4 peut ne comporter que des fentes ou rainures 11 aptes à coopérer avec les pattes 10 de la pièce 3, ou inversement.

En variante encore les pièces 3 et 4 comportent chacune pattes 10 et fentes ou rainures 11. Ces moyens d'assemblage 10 et 11 sont avantageusement configurés pour permettre un assemblage et un désassemblage aisés des pièces 3 et 4 formant le corps 2. Les moyens d'assemblage 10 et 11 sont également configurés, dans l'exemple décrit, pour permettre que l'assemblage soit effectué en exerçant sur les pièces 3 et 4 du corps des forces dirigées perpendiculairement à l'axe longitudinal Y du corps 2.

Comme on peut le voir sur les figures, chaque pièce 3 et 4 peut comporter une cavité 12, ces dernières étant disposées de telle sorte que lorsque les pièces 3 et 4 sont assemblées pour former le corps 2, les cavités 12 se superposent. Comme on peut le voir sur les figures, un ressort 14 peut être disposé à l'intérieur du corps 2, ce ressort 14 étant notamment un ressort en compression configuré pour exercer une force parallèle à l'axe Y.

Le corps 2 peut être réalisé, au moins pour certaines des pièces, voire pour toutes les pièces, en matière plastique.

La férule 6 est montée mobile à l'intérieur du corps 2. Lorsque les pièces 2 et 3 sont assemblées, au moins une portion 36 du corps entoure extérieurement la férule 6. Cette férule 6 est dans l'exemple considéré de type MT et de section transversale rectangulaire par rapport à un axe longitudinal X de la férule. La férule 6 comporte par exemple sur ses bords latéraux 15 un épaulement 16 qui, par coopération avec un épaulement 17 ménagé dans les faces latérales internes du corps 2, définit une butée pour le déplacement vers l'avant de la férule 6 à l'intérieur du corps 2.

Le ressort 14 peut comporter une extrémité venant en appui, directement ou non, contre la férule 6, la compression du ressort définissant une butée pour le déplacement vers l'arrière de la férule 6 dans le corps 2. Dans l'exemple considéré, l'axe longitudinal à la férule X se confond avec l'axe longitudinal Y du corps 2 lorsque la férule 6 est en place dans le corps 2.

La face arrière 18 de la férule 6 comporte une cavité permettant l'entrée d'un faisceau de fibres optiques revêtues 20. La face avant 19 de la férule 6 comporte dans l'exemple considéré une cavité 21, le faisceau de fibres optiques 20 s'étendant par exemple entre la cavité de la face arrière 18 et la cavité 21 à l'intérieur de la férule 6.

Comme représenté sur les figures, la face supérieure et/ou la face inférieure de la férule, peuvent présenter une découpe 23 à travers laquelle le ruban 20 est visible lorsque ce dernier traverse la férule 6.

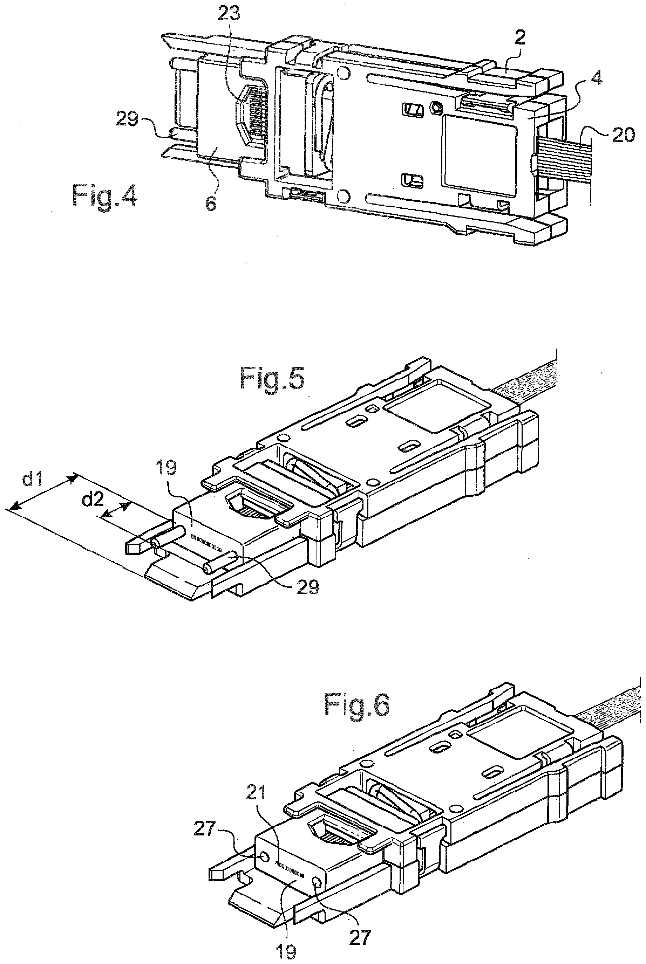

La face avant 19 de la férule 6 comporte encore dans l'exemple décrit deux ouvertures 27 sur lesquelles débouchent deux logements 28 dans lesquels sont disposées des goupilles 29 lorsque le contact 1 est de type mâle, comme représenté sur la figure 5.

Comme on peut le voir sur les figures, le corps 2 comporte, au niveau de son extrémité avant destinée à venir au contact d'un contact de type complémentaire lors d'une opération de connexion, une portion s'étendant selon l'axe X de la férule au-delà de la férule 6 vers l'extérieur de celle-ci lorsque cette dernière est disposée dans le corps 2, pour toute position de celle-ci dans le corps 2 entre les butées avant et arrière. Cette portion comporte dans l'exemple de la figure 1 :
- deux bras 30 et 32 s'étendant dans le prolongement de portions du corps 2 disposées en regard des bords latéraux 15 de la férule 6, et
- une avancée 31 disposée entre les deux bras 30 et 32.

Dans l'exemple considéré, ces éléments 30, 31, 32 sont portés par une seule des pièces formant le corps 2, à savoir la pièce 3. L'autre pièce 4 formant le corps 2 est dépourvue de tels éléments 30 à 32. L'extrémité avant selon l'axe Y du corps 2 de cette autre pièce 4 comporte une portion 35 au-delà de laquelle la férule 6 peut s'étendre dans des positions de celle-ci, notamment dans des positions proches de la position constituant une butée arrière pour son déplacement dans le corps 2.

Comme on peut le voir sur la figure 5, lorsque la férule 6 d'un contact de type mâle est dans la position en butée vers l'avant, les éléments 30 à 32 s'étendent au-delà de la face avant 19 de la férule 6 sur une première distance d₁, cette première distance d₁ étant supérieure à la deuxième distance d₂ selon laquelle les goupilles 29 de la férule 6 s'étendent au-delà de ladite face avant 19 lorsque ces goupilles 29 sont en place dans les logements 28, notamment lorsque les goupilles 29 s'étendent à travers toute la férule 6.

Lors de la connexion du contact représenté à la figure 5 au contact représenté à la figure 6, les contacts sont positionnés de manière à ce que la pièce 2 de chaque contact vienne en face de la pièce 3 de l'autre contact et réciproquement. Ces deux contacts sont ensuite approchés l'un de l'autre. Lors d'une première étape d'alignement, les bras 30 et 32 du contact de type mâle représenté à la figure 5 guident l'extrémité avant des bords latéraux 15 de la férule 6 du contact de type femelle représenté à la figure 6, avant que cette férule 6 ne vienne au contact des goupilles 29 de la férule du contact de type mâle. Une fois cette première étape de guidage effectuée, l'introduction dans les logements 28 de la férule du contact de type femelle des goupilles de la férule 6 du contact de type mâle permet la mise en oeuvre d'une deuxième étape de guidage entre les deux contacts de types mâle et femelle.

Des contacts 1 mâle ou femelle tels que décrits ci-dessus peuvent être reçus au sein d'un boîtier 40 d'un connecteur multicontact 39, par exemple d'un connecteur multicontact.

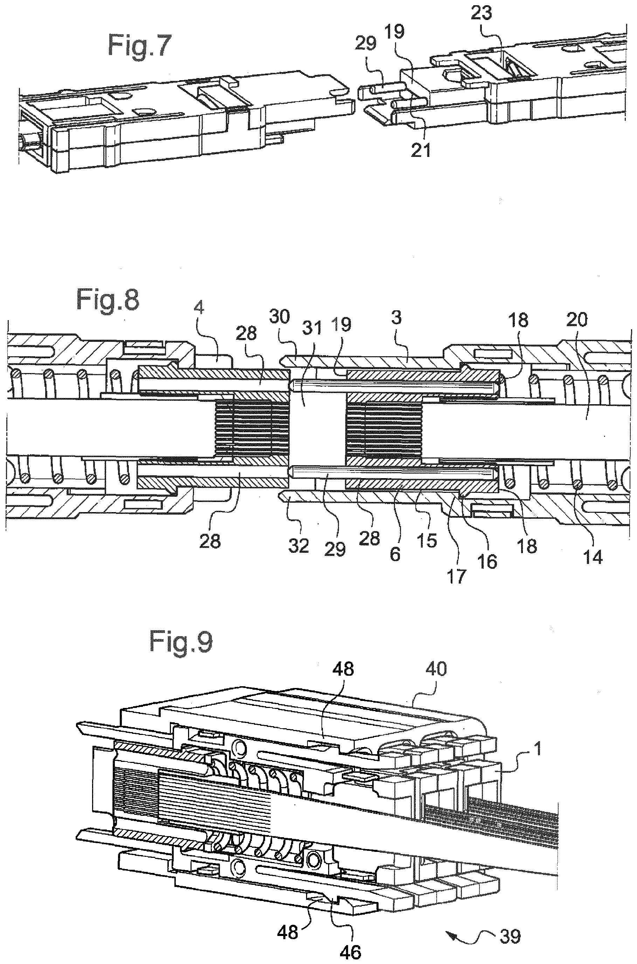

Ce boîtier 40 est par exemple configuré pour recevoir au moins un contact optique, par exemple entre deux et dix contacts. Ces contacts peuvent, comme représenté à la figure 9, être superposés lorsqu'ils sont reçus dans le boîtier 40. Les contacts et le boîtier 40 peuvent comporter des moyens permettant le montage de façon amovible des contacts dans le boîtier. Il s'agit par exemple de languettes 45 portées par chaque face latérale du corps 2, notamment par chaque face latérale de chacune des pièces 3 et 4 formant le corps 2, ces languettes étant pivotables et portant un ou plusieurs reliefs 46 pouvant coopérer avec une ou plusieurs gorges 48 ménagées dans la paroi du boîtier 40.

L'invention n'est pas limitée aux exemples qui viennent d'être décrits.

## Revendications

1. Contact optique (1), comportant :
- une férule (6) s'étendant selon un axe longitudinal (X), la férule (6) comportant une face avant (19) venant en regard de la férule complémentaire d'un contact optique de type complémentaire lorsque ledit contact optique (1) est connecté audit contact optique de type complémentaire, et une face arrière (18) opposée à ladite face avant (19), et
- un corps (2) à l'intérieur duquel est reçue la férule (6), de façon mobile ou non, le corps (2) comportant au moins une portion entourant extérieurement la férule (6) autour de l'axe longitudinal (X) de celle-ci et au moins une portion s'étendant au-delà de la face arrière (18) de la férule (6) vers l'extérieur de celle-ci,
**caractérisé par le fait que** l'extrémité du corps (2) venant en regard d'un contact optique de type complémentaire lorsque ledit contact optique (1) est connecté audit contact optique de type complémentaire comporte au moins une portion (30, 31, 32) s'étendant au-delà de la face avant (19) de la férule (6) vers l'extérieur de celle-ci, pour toute position de la férule à l'intérieur du corps, ladite portion comportant au moins un bras (30, 32) s'étendant dans le prolongement d'une paroi du corps au contact d'un bord latéral (15) de la férule (6), ledit bras étant adapté pour coulisser le long d'un bord latéral de la férule complémentaire d'un contact optique de type complémentaire de sorte à permettre un premier alignement de la férule complémentaire et **par le fait que** ladite extrémité du corps (2) comporte également au moins une portion (35) au-delà de laquelle s'étend la face avant (19) de la férule (6).

2. Contact selon la revendication 1, la férule (6) étant montée mobile dans le corps (2) selon un axe parallèle à son axe longitudinal (X).

3. Contact selon la revendication 2, comportant un ressort (14) monté dans le corps et dont une extrémité vient en appui contre la face arrière (18) de la férule (6).

4. Contact selon la revendication 2 ou 3, la férule (6) ayant une section transversale rectangulaire et chaque bord latéral (15) de la férule (6) comportant un épaulement (16) venant en butée avec un épaulement (17) du corps (2) pour définir une butée pour le déplacement vers l'avant de la férule (6) dans le corps (2).

5. Contact selon l'une quelconque des revendications précédentes, étant de type mâle et comportant au moins une goupille (29) et un logement (28) pour recevoir ladite goupille (29), cette dernière étant disposée parallèlement à l'axe (X) de la férule lorsqu'elle est montée dans ledit logement (28), la goupille (29) s'étendant au-delà de la face avant (19) de la férule vers l'extérieur de celle-ci sur une deuxième distance (d₂), ledit bras s'étendant au-delà de la face avant (19) de la férule (6) sur une première distance (d₁) supérieure à la deuxième distance (d₂).

6. Contact selon la revendication 5, comportant deux bras (30, 32), chacun desdits bras s'étendant dans le prolongement d'une paroi du corps au contact d'un bord latéral (15) de la férule (6).

7. Contact selon l'une quelconque des revendications 1 à 6, le corps (2) étant formé par au moins deux pièces (3, 4), chacune desdites pièces (3, 4) comportant des moyens (10, 11) permettant l'assemblage amovible d'une pièce (3, 4) avec une autre (3,4), lesdits moyens (10, 11) étant configurés de manière à ce que l'assemblage et le désassemblage desdites pièces (3, 4) s'effectuent en exerçant une force sur les pièces (3, 4) perpendiculairement à l'axe longitudinal (X) de la férule.

8. Contact selon la revendication 7, ladite portion (30, 31, 32) de ladite extrémité du corps (2) s'étendant au-delà de la face avant (19) de la férule (6) n'étant portée que par une seule (3) desdites pièces du corps et ladite portion (35) de ladite extrémité du corps (2) au-delà de laquelle la face avant (19) de la férule (6) peut s'étendre étant portée par une autre (4) desdites pièces formant le corps (2).

9. Contact selon la revendication 7 ou 8, le corps (2) étant formé par deux pièces (3, 4) et chaque pièce (3, 4) comportant une découpe (12) sur une face latérale, de telle sorte que lorsque les deux pièces (3, 4) sont assemblées, les découpes (12) soient en regard l'une de l'autre.

10. Connecteur multicontact (39), comportant un boîtier (40) dans lequel est reçu au moins un contact (1) selon l'une quelconque des revendications 1 à 9.

11. Procédé de connexion de deux contacts optiques (1), l'un des deux contacts optiques étant selon la revendication 5 et l'autre des deux contacts optiques étant selon l'une quelconque des revendications 1 à 4, de type femelle et ayant une férule (6) comportant au moins un logement (28) pour recevoir une goupille (29) d'un contact (1) de type mâle,
le procédé comportant les étapes suivantes :
- réaliser un premier alignement en faisant coulisser au moins un bord latéral (15) de la férule (6) du contact de type femelle (1) contre au moins un bras (30, 32) du corps (2) du contact (1) de type mâle et,
- réaliser un deuxième alignement en introduisant au moins une goupille (29) du contact (1) de type mâle dans ledit logement (28) de la férule (6) du contact (1) de type femelle.

## Patentansprüche

1. Optischer Kontakt (1), der aufweist:
- eine sich gemäß einer Längsachse (X) erstreckende Hülse (6), wobei die Hülse (6) eine Vorderseite (19), die der komplementären Hülse eines optischen Kontakts komplementärer Art gegenüberliegt, wenn der optische Kontakt (1) mit dem optischen Kontakt komplementärer Art verbunden wird, und eine der Vorderseite (19) entgegengesetzte Rückseite (18) aufweist, und
- einen Körper (2), in dessen Innerem die Hülse (6) beweglich oder nicht aufgenommen wird, wobei der Körper (2) mindestens einen Teil, der die Hülse (6) um deren Längsachse (X) umgibt, und mindestens einen Teil aufweist, der sich über die Rückseite (18) der Hülse (6) hinaus zu deren Außenseite erstreckt,
**dadurch gekennzeichnet, dass** das Ende des Körpers (2), das einem optischen Kontakt komplementärer Art gegenüberliegt, wenn der optische Kontakt (1) mit dem optischen Kontakt komplementärer Art verbunden wird, mindestens einen Teil (30, 31, 32) aufweist, der sich für jede Stellung der Hülse innerhalb des Körpers über die Vorderseite (19) der Hülse (6) hinaus zu deren Außenseite erstreckt, wobei der Teil mindestens einen Arm (30, 32) aufweist, der sich in der Verlängerung einer Wand des Körpers in Kontakt mit einem Seitenrand (15) der Hülse (6) erstreckt, wobei der Arm geeignet ist, entlang eines Seitenrands der komplementären Hülse eines optischen Kontakts komplementärer Art zu gleiten, um eine erste fluchtende Ausrichtung der komplementären Hülse zu ermöglichen, und dass das Ende des Körpers (2) ebenfalls mindestens einen Teil (35) aufweist, über den hinaus sich die Vorderseite (19) der Hülse (6) erstreckt.

2. Kontakt nach Anspruch 1, wobei die Hülse (6) in den Körper (2) gemäß einer Achse parallel zu ihrer Längsachse (X) beweglich montiert wird.

3. Kontakt nach Anspruch 2, der eine Feder (14) aufweist, die in den Körper montiert ist und von der ein Ende gegen die Rückseite (18) der Hülse (6) in Anlage kommt.

4. Kontakt nach Anspruch 2 oder 3, wobei die Hülse (6) einen rechtwinkligen Querschnitt hat und jeder Seitenrand (15) der Hülse (6) eine Schulter (16) aufweist, die mit einer Schulter (17) des Körpers (2) in Anschlag kommt, um einen Anschlag für die Verschiebung der Hülse (6) im Körper (2) nach vorne zu definieren.

5. Kontakt nach einem der vorhergehenden Ansprüche, der vom Steckertyp ist und mindestens einen Stift (29) und einen Sitz (28) zur Aufnahme des Stifts (29) aufweist, wobei letzterer parallel zur Achse (X) der Hülse angeordnet ist, wenn er in den Sitz (28) montiert ist, wobei der Stift (29) sich über die Vorderseite (19) der Hülse hinaus zu deren Außenseite über einen zweiten Abstand (d₂) erstreckt, wobei der Arm sich über die Vorderseite (19) der Hülse (6) hinaus über einen ersten Abstand (d₁) größer als der zweite Abstand (d₂) erstreckt.

6. Kontakt nach Anspruch 5, der zwei Arme (30, 32) aufweist, wobei jeder der Arme sich in der Verlängerung einer Wand des Körpers in Kontakt mit einem Seitenrand (15) der Hülse (6) erstreckt.

7. Kontakt nach einem der Ansprüche 1 bis 6, wobei der Körper (2) von mindestens zwei Bauteilen (3, 4) gebildet wird, wobei jedes der Bauteile (3, 4) Einrichtungen (10, 11) aufweist, die den lösbaren Zusammenbau eines Bauteils (3, 4) mit einem anderen (3, 4) erlauben, wobei die Einrichtungen (10, 11) so konfiguriert sind, dass der Zusammenbau und das Zerlegen der Bauteile (3, 4) durchgeführt werden, indem eine Kraft auf die Bauteile (3, 4) lotrecht zur Längsachse (X) der Hülse ausgeübt wird.

8. Kontakt nach Anspruch 7, wobei der Teil (30, 31, 32) des Endes des Körpers (2), der sich über die Vorderseite (19) der Hülse (6) hinaus erstreckt, nur von einem (3) der Bauteile des Körpers getragen wird, und der Teil (35) des Endes des Körpers (2), über den hinaus die Vorderseite (19) der Hülse (6) sich erstrecken kann, von einem anderen der den Körper (2) bildenden Bauteile (4) getragen wird.

9. Kontakt nach Anspruch 7 oder 8, wobei der Körper (2) von zwei Bauteilen (3, 4) gebildet wird und jedes Bauteil (3, 4) einen Ausschnitt (12) auf einer Seitenfläche aufweist, so dass, wen die zwei Bauteile (3, 4) zusammengebaut sind, die Ausschnitte (12) einander gegenüber liegen.

10. Mehrkontaktverbinder (39), der ein Gehäuse (40) aufweist, in dem mindestens ein Kontakt (1) nach einem der Ansprüche 1 bis 9 aufgenommen wird.

11. Verfahren zur Verbindung von zwei optischen Kontakten (1), wobei einer der zwei optischen Kontakte nach Anspruch 5 und der andere der zwei optischen Kontakte nach einem der Ansprüche 1 bis 4 ist, von Buchsentyp und mit einer Hülse (6), die mindestens einen Sitz (28) zur Aufnahme eines Stifts (29) eines Kontakts (1) vom Steckertyp hat, wobei das Verfahren die folgenden Schritte aufweist:
- Durchführen einer ersten fluchtenden Ausrichtung, indem mindestens ein Seitenrand (15) der Hülse (6) des Kontakts vom Buchsentyp (1) gegen mindestens einen Arm (30, 32) des Körpers (2) des Kontakts (1) vom Steckertyp verschoben wird, und
- Durchführen einer zweiten fluchtenden Ausrichtung, indem mindestens ein Stift (29) des Kontakts (1) vom Steckertyp in den Sitz (28) der Hülse (6) des Kontakts (1) vom Buchsentyp eingeführt wird.

## Claims

1. An optical contact (1) comprising:
- a ferrule (6) extending along a longitudinal axis (X), the ferrule (6) having a front face (19) facing an optical contact of complementary type when said optical contact (1) is connected to said optical contact of complementary type, and a rear face (18) opposite from said front face (19); and
- a body (2) within which the ferrule (6) is received in a moveable manner or not, the body (2) including at least one portion surrounding the ferrule (6) around the longitudinal axis (X) thereof, and at least one portion extending beyond the rear face (18) of the ferrule (6) towards the outside thereof;
**characterized by** the fact that the end of the body (2) facing an optical contact of complementary type when said optical contact (1) is connected to said optical contact of complementary type includes at least one portion (30, 31, 32) extending beyond the front face (19) of the ferrule (6) towards the outside thereof, for any position of the ferrule inside the body, said portion including at least one arm (30, 32) extending a wall of the body that is in contact with a side (15) of the ferrule (6), said arm being adapted to slide against a side of the ferrule of the optical contact of complementary type such that to allow a first alignment step of the complementary ferrule and by the fact that said end of the body (2) also includes at least one portion (35) beyond which the front face (19) of the ferrule (6) extends.

2. A contact according to claim 1, the ferrule (6) being mounted inside the body (2) to be movable along an axis parallel to its longitudinal axis (X).

3. A contact according to claim 2, including a spring (14) mounted in the body and having an end that presses against the rear face (18) of the ferrule (6).

4. A contact according to claim 2 or claim 3, the ferrule (6) having a rectangular cross-section and each side (15) of the ferrule (6) including a shoulder (16) that comes into abutment against a shoulder (17) of the body (2) to define an abutment against forward movement of the ferrule (6) inside the body (2).

5. A contact according to anyone of the preceding claims, the contact being of the male type and including at least one pin (29) and a housing (28) for receiving said pin (29), the pin being arranged parallel to the axis (x) of the ferrule when it is mounted in said housing (28), the pin (29) extending beyond the front face (19) of the ferrule towards the outside thereof over a second distance (d₂), said body extending beyond the front face of the ferrule including at least one arm extending beyond the front face (19) of the ferrule (6) over a first distance (d₁) that is greater than the second distance (d₂).

6. A contact according to claim 5, including two arms (30, 32), each of said arms extending a wall of the body that is in contact with a side (15) of the ferrule (6).

7. A contact according to anyone of the claims 1 to 6, the body (2) being made up of at least two parts (3,4), each of said parts (3,4) including means (10,11) enabling a part (3,4) to be releasably assembled with another part (3,4), said means (10,11) being configured in such a manner that assembly and disassembly of said parts (3,4) take place by exerting a force on the parts (3,4) perpendicularly to the longitudinal axis (X) of the ferrule.

8. A contact according to claim 7, said portion (30, 31, 32) of said end of the body (2) that extends beyond the front face (19) of the ferrule being carried by only one (3) of said parts of the body, and said portion (35) of said end of the body (2) beyond which the front face (19) of the ferrule (6) can extend, being carried by another one (4) of said parts forming the body (2).

9. A contact according to claim 7 or 8, the body (2) being made up of two parts (3,4), and each part (3,4) including a cutout (12) in a side face such that when the two parts (3,4) are assembled together, the cutouts (12) face each other.

10. A multicontact connector (39) including a unit (40) in which at least one contact (1) according to anyone of claims 1 to 9 is received.

11. A method of connecting two optical contacts (1) together, one of the two optical contacts being according to claim 5 and the other of the two optical contacts being according to anyone of claims 1 to 4, being of female type, and having a ferrule (6) including at least one housing (28) for receiving a pin (29) of a male-type contact (1);
the method comprising the following steps:
- a first alignment step in which at least one side (15) of the ferrule (6) of the female-type contact (1) is caused to slide against at least one arm (30, 32) of the body (2) of the male-type contact (1); and
- a second alignment step in which at least one pin (29) of the male-type contact (1) is inserted into said housing (28) of the ferrule (6) of the female-type contact (1).
